# EUROPEAN PATENT SPECIFICATION

(11) **EP 0 424 575 B1**
(45) Date of publication and mention of the grant of the patent: **01.03.1995**
(21) Application number: 89124139.0
(22) Date of filing: 29.12.1989
(51) Int. Cl.: B28D 1/24, B26D 1/18

(54) **Shaft-integral type cutter wheel and cutter**
Schneidrad mit integriertem Schaft und Schneider
Disque à trancher à queue intégrée et trancheuse

(30) Priority: 25.10.1989 JP 277893/89
(43) Date of publication of application: 02.05.1991
(73) Proprietor: Stanley Electric Co., Ltd., Meguro-ku Tokyo 153 (JP); TOSHIBA TUNGALOY CO. LTD., Kawasaki-shi, Kanagawa-ken (JP); JOYO ENGINEERING LABORATORY CO., LTD., Kawasaki-shi Kanagawa-ken (JP)
(72) Inventor: Mori, Kiju, Machida-shi Tokyo (JP); Shibuki, Kunio c/o Toshiba Tungaloy Co., Ltd., Kawasaki-shi Kanagawa-ken (JP); Onose, Takashi, Kawasaki-shi Kanagawa-ken (JP); Akanuma, Youichiro, Meguro-ku Tokyo (JP); Kasahara, Takao, Shimoina-gun Nagano-ken (JP); Matsuno, Yoshiteru, Shimoina-gun Nagano-ken (JP); Sato, Minoru c/o Toshiba Tungaloy Co., Ltd., Kawasaki-shi Kanagawa-ken (JP); Sato, Yoshiyuki c/o Toshiba Tungaloy Co., Ltd., Kawasaki-shi Kanagawa-ken (JP)
(74) Representative: Twelmeier, Ulrich, Dipl.Phys.

(56) References cited:
- EP-A- 0 274 990
- JP-U- 5 988 428

## Description

The present invention relates to a cutting apparatus according to the preamble of claim 1 for cutting hard members such as glass, semiconductor substrates, ceramics or tiles.

### Description of the Prior Art

FIG. 10 shows an example of a conventional cutter 100 of this kind, in which a cutter wheel 101 having a scoring portion 102 and a shaft portion 103 separately manufactured is commercially available. When the scoring portion 102 is mounted on a holder 104, the shaft portion 103 extends through both the holder 104 and the scoring portion 102. For facilitating a replacement of the scoring portion 102, the cutter wheel 101 of this structure, that is, the divided scoring portion 102 and the shaft portion 103 have been exclusively employed heretofore. A glass cutter having a scoring portion and a shaft portion formed integral with each other is disclosed in JP-U-59-88428.

However, in the structure of the aforementioned conventional cutter 100 and cutter wheel 101, the shaft portion 103 is retractable. Therefore, it is necessary to provide a suitable clearance (a play) in either or both the scoring portion 102 and the shaft portion 103 or the shaft portion 103 and the holder 104. For this reason, there occurs a problem in that for example, when a glass surface is scribed, a scribing line (a scoring line) becomes zigzagged, resulting in a lowering of cutting accuracy. In addition, the provision of the aforesaid clearance allows an easy entry of chips into the clearance, leading to a problem in that the scoring portion 102, the shaft portion 103 or the holder 104 becomes worn to materially shorten the durable life of the cutter wheel 101 or the whole cutter 100. Corresponding drawbacks are encountered in a cutting apparatus as disclosed in EP-A-274 990 which is very similar to the cutter discussed above. These drawbacks should have been solved.

In the glass cutter having the scoring portion and the shaft portion formed integral with each other as disclosed in JP-U-59-88428, the shaft portion is formed with a taper. Therefore, when the shaft portion is inserted into a bearing portion, the shaft portion and the bearing portion are placed in partial face contact or the extreme end of the shaft portion and the bearing portion are placed in point contact, as a consequence of which when the shaft portion rotates, a rotational vibration tends to occur in the cutting edge. As a result, a scribing line becomes zigzagged, resulting in a lowering of cutting accuracy and a lowering of the durable life, similarly to the previous case.

Moreover, in the glass cutter disclosed in the aforementioned publication, the shaft portion is formed with a taper, and therefore working is difficult. The bearing portion need be subjected to taper working, rendering working further difficult. A bearing member such as a ball bearing cannot be used in the bearing portion, and as a result, the shaft portion is easily damaged. The problem similar to that as previously mentioned occurs.

### SUMMARY OF THE INVENTION

As specific means for solving the aforesaid problems encountered in prior art, the present invention provides a cutting apparatus as defined in claim 1. According to the present invention, a portion requiring a clearance can be eliminated to render working with high accuracy possible, reduce an occurrence of wear and extend the durable life, thus solving the aforementioned problems of prior art.

### BRIEF DESCRIPTION OF THE DRAWINGS

FIG. 1 is a sectional view showing one embodiment of a scoring wheel according to the present invention;
FIG. 2 is a perspective view showing one embodiment of a cutter according to the present invention;
FIG. 3 is likewise a sectional view showing a second embodiment of a scoring wheel according to the present invention;
FIG. 4 is likewise a sectional view showing a third embodiment of the scoring wheel;
FIG. 5 is likewise a sectional view showing a fourth embodiment of the scoring wheel;
FIG. 6 is likewise a sectional view showing a fifth embodiment;
FIG. 7 is likewise a sectional view showing a sixth embodiment of the scoring wheel;
FIG. 8 is likewise a sectional view showing a seventh embodiment of the scoring wheel;
FIG. 9 is likewise a sectional view showing an eighth embodiment of the scoring wheel; and
FIG. 10 is a sectional view showing a conventional cutter.

### DESCRIPTION OF THE PREFERRED EMBODIMENTS

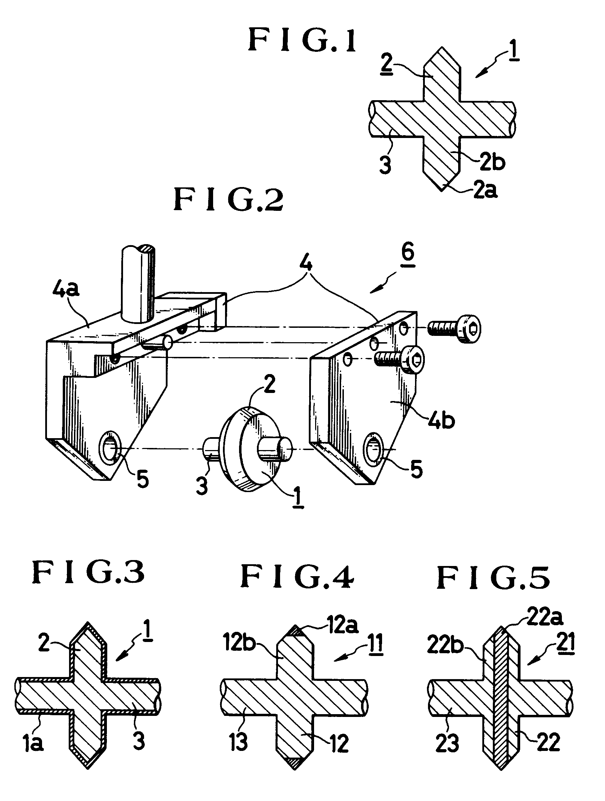

FIG. 1 shows a first embodiment of the present invention, in which a scoring portion 2 and a shaft portion 3 of a scoring wheel 1 are formed of the same member and formed integral with each other. Members suitable for the scoring portion 2, for example, such as sintered hard alloy, thermit, Si₃N₄ group ceramic sintered body, Zr0₂ ceramic sintered body are used, the members being formed into an integral one-piece configuration by means such as cutting a block material.

In this embodiment, the aforesaid shaft portion 3 is also formed of a sintered hard member enough to function as the scoring portion 2. Therefore, it is liable to restrict working means or it is liable to take a long period of time for working. It is therefore preferable to form a rough configuration in advance by, for example, forging, casting, press-molding, sintering or the like and reduce a working allowance during working to provide a predetermined configuration as small as possible.

In the first embodiment as well as embodiments described later, at the time of working to provide the predetermined configuration as described above, at least an edge portion 2a of the scoring portion 2 is subjected to finish working with the shaft portion 3 as a reference, thereby enhancing the accuracy when it is mounted on a holder as previously described in connection with prior art. It has been found that polishing of the edge portion 2a effected at that time is preferably carried out by radial polishing approximately perpendicular to the rotational direction of the scoring wheel in terms of sharpness. Therefore, the first embodiment as well as thereafter embodiments employ the radial polishing.

The edge portion 2a of the scoring portion is finished to have a surface roughness of preferably, Rmax 1.5 »m or less, in conformity with JIS BO601.

FIG. 2 shows a cutter 6 according to the present invention formed by employing the scoring wheel 1 formed as described above. The scoring portion 2 and the shaft portion 3 are formed integral with each other. With this, a holder 4 is designed so as to be separated into a holder body 4a and a holder plate 4b in place of the conventional structure in which the shaft portion is inserted from the side of the holder, whereby the holder body 4a and the holder plate 4b are held to hold the scoring wheel 1.

Furthermore, the scoring portion 2 and the shaft portion 3 are formed integral with each other. With this, an engaging portion between the shaft portion 3 and the holder 4 exclusively has charge of rotation. Therefore, a bearing 5, for example, such as a ball bearing, is provided in said engaging portion to further positively achieve the object thereof.

The function and effect of the scoring wheel 1 and the cutter 6 according to the present invention will be described hereinafter.

First, as a member to be formed, a Co alloy of 1 % by weight of WC is employed to form a scoring wheel 1 having the structure of the present invention in which the edge portion has a surace roughness according to JIS BO601 of Rmax 1.5 »m. This scoring wheel was compared with the conventional scoring wheel. The scoring portion 2 and the shaft portion 3 are formed integral with each other, and in addition, a bearing 5 is provided and fitted in a holder 4 to constitute a cutter 6. With this, staggering of the scoring portion 2 during execution of scribing was overcome. With respect to the producing accuracy of a scribing line, the zigzagging appearing in prior art has been improved to a state of absence so that the enhancement of accuracy by one place or more than 10 times is achieved. In addition, the scoring portion 2 and the shaft portion 3 are formed integral with each other and the bearing 5 of the holder 4 exclusively has charge of rotation. With this, the durability is also markedly enhanced. The durable degree at which the accuracy is lowered to a predetermined limit value can be extended by 20 to 30 times as compared with prior art.

Similar practical test was conducted using a conventional scoring wheel in which a bearing with a taper and a scoring portion are formed integral with each other. The service life was about 1/10 to 1/2 as compared with the scoring wheel according to the present invention.

At the same time, the staggering of the scoring portion 2 as described above has been overcome. With this, no problem in disconnection of a scribing line often encountered heretofore occurs. A scribing line can be produced with relatively less pressure, improving the working efficiency.

In addition to the aforementioned members as the scoring portion 2, the following were used:
(a) Co alloy of WC - 1 wt %, TiC - 2 wt %, TaC - 0.5 wt %, and Cr₃C₂ - 4 wt %.
(b) Co alloy of WC - 0.5 wt %, TiC - 1 wt %, TaC - 0.5 wt %, and VC - 5 wt. %.
It has been confirmed that the same function and effect were obtained with respect to all the members.

FIG. 3 shows a second embodiment of a scoring wheel 1 according to the present invention. A harder coating material 1a is-coated on the scoring wheel 1 formed similarly to the previous first embodiment to further enhance a scribing effect. For the coating material 1a, there can be mentioned, for example, such as diamond, diamond-like carbon, CBN and the like.

The fundamental function and effect of this embodiment as well as embodiments later described are similar to those described in connection with the first embodiment, and therefore description of such function and effect will be omitted.

In a third embodiment shown in FIG. 4, an edge portion 12a of a scoring portion 12 of a scoring wheel 11 and a base portion 12b are formed from two diffrent kinds of members. The edge portion 12a is formed, for example, of a diamond containing sintered material whereby the edge portion 12b exclusive has charge of scribing. The base portion 12b and shaft portion 13 are formed of material selected from those excellent in workability, for example, such as normal steel, thus enhancing the production efficiency.

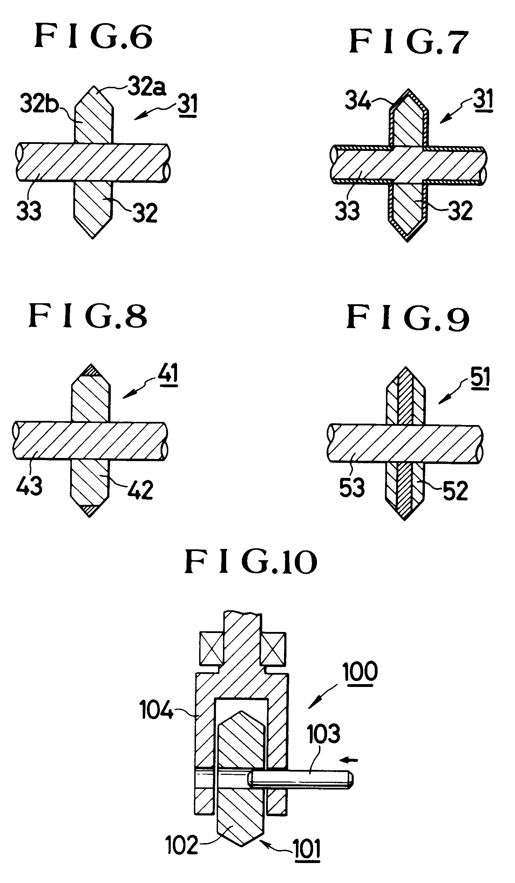

A fourth embodiment shown in FIG. 5 is based on substantially the same idea in design as that of the third embodiment, in which a scoring wheel 21 has a scoring portion 22 which is likewise formed from two members, i.e., for example, a diamond containing sintered member constituting an edge portion 22a for having charge of scribing and a base portion 23b formed integral with a shaft portion 23 except that in the previous embodiment, the divisional direction is the peripheral direction of the scoring portion 12 whereas in this embodiment, the divisional direction is the thickness direction of the scoring portion 22, whereby the adhesive area is increased to enhance the strength and a re-polishing allowance with respect to a wear of the edge portion 22a resulting from use, for example, is advantageously increased. However, because the shaft portion 23 is divided into two sections, the maintenance of accuracy in the manufacturing process of the scoring wheel 21 is required to be somewhat higher as compared with that of the third embodiment. It is therefore preferable to select a suitable dividing method according to the object, use, price and the like of the scoring wheel.

FIG. 6 likewise shows a fifth embodiment of the present invention. In this scoring wheel 31, the scoring portion and the shaft portion are formed from the same member integral (one-piece) with each other to one degree or another in the aforementioned first to fourth embodiments in an attempt of overcoming the restriction in manufacture. The shaft portion 33 is formed from a member that may be easily machined, for example, such as steel, and a scoring portion 32 formed from a sintered hard member suitable for scribing into a shape of an approximate bead on an abacus and is fitted on the shaft portion 33 to provide a firm body by suitable means such as diffusion joining, welding, pressing, shrinkage fitting or brazing. At that time, the edge portion 32b after having been integrated is subjected to finish-working with the shaft portion 33 as a reference to remove an eccentricity.

The aforementioned fifth embodiment shows a modified example of the shaft portion 33 corresponding to the first embodiment. Needless to say, a sixth embodiment wherein a coating material 34 formed of a sintered hard member is further coated on the scoring wheel 31 in the fifth embodiment corresponding to the second embodiment as shown in FIG. 7, a scoring wheel 41 in a seventh embodiment as a modified example similar to the fifth embodiment of the shaft portion 43 in the third embodiment shown in FIG. 8 and a scoring wheel 51 in an eighth embodiment as a modified example similar to the shaft portion 53 in the fourth embodiment shown in FIG. 9 can be naturally carried out. Also, the function and effect for the respective embodiments are similar to those mentioned in connection with the first embodiment.

As described above, according to the present invention, the scoring portion and the shaft portion are formed into one-piece or joined integral with each other by joining means to form a scoring wheel in a cutting apparatus. Therefore,a clearance or a play between the scoring portion and the shaft portion provided for detachable mounting to the holder in the prior art structure can be eliminated, and the present invention has an excellent effect of materially enhancing the accuracy of a scribing line produced by the scoring wheel. In addition, the shaft portion exclusively has charge of rotation of the scoring wheel to thereby provide a cutter capable of mounting a ball bearing or the like on the holder side, thus exhibiting extremely excellent effects capable of materially extending the durable life of the cutter.

## Claims

1. A cutting apparatus (6) for cutting hard members such as glass, semi-conductor substrates, ceramics or tiles, comprising a scoring wheel (1) with a shaft portion (3) and a scoring portion (2), the shaft portion (3) and the scoring portion (2) being integral with each other, the shaft portion (3) being rotatably supported in bearings (5) of a holder (4), characterised in that at least the shaft portions (3) which are supported in the bearings (5) are cylindrical.

2. The cutting apparatus according to claim 1, wherein said shaft portion (3) and at least a part of said scoring portion (2) are combined to form a single onepiece body.

3. The cutting apparatus according to claim 1, wherein the scoring wheel (1) comprises a scoring portion (2) and a shaft (3) which are joined using joining means.

4. The cutting apparatus according to claim 1, 2 or 3, wherein said scoring portion (2) has at least an edge portion (2a) subjected to finish-working with said shaft portion (3) as a reference, said edge portion (2a) having a surface roughness less than Rmax=1.5 »m.

5. The cutting apparatus according to claim 4, wherein said finish-working is carried out as radial polishing with respect to said scoring portion (2).

## Patentansprüche

1. Schneidvorrichtung (6) zum Schneiden von harten Werkstoffen, wie Glas, Halbleitersubstraten, Keramik oder Platten, mit einen Ritzrad (1), das einen Wellenteil (3) und einen Ritzteil (2) besitzt, wobei der Wellenteil (3) und der Ritzteil (2) aus einem Stück bestehen und der Wellenteil (3) in Lagern (5) eines Halters (4) drehbar gelagert ist, dadurch gekennzeichnet, daß mindestens die in den Lagern (5) gelagerten Wellenteile (3) zylindrisch sind.

2. Schneidvorrichtung nach Anspruch 1, in der der Wellenteil (3) und wenigstens ein Teil des Ritzteils (2) miteinander zu einem einzigen einstückigen Körper vereinigt sind.

3. Schneidvorrichtung nach Anspruch 1, in der das Ritzrad (1) einen Ritzteil (2) und eine Welle (3) aufweist, die durch Verbindungsmittel miteinander verbunden sind.

4. Schneidvorrichtung nach Anspruch 1, 2 oder 3, in der der Ritzteil (2) mindestens einen Randteil (2a) besitzt, der unter Verwendung des Wellenteils (3) feinbearbeitet wird und der eine Rauhtiefe unter Rmax = 1,5 Mikrometer hat.

5. Schneidvorrichtung nach Anspruch 4, in der die Feinbearbeitung als radiales Polieren unter Bezugnahme auf den Ritzteil (2) durchgeführt wird.

## Revendications

1. Dispositif à trancher (6) pour trancher des matériaux durs tels que le verre, les substrats de semi-conducteurs, les céramiques ou les tuiles, comprenant une roue de rayage (1) constituée d'un élément d'arbre (3) et d'un élément de rayage (2), l'élément d'arbre (3) et l'élément de rayage (2) constituant un ensemble monobloc, l'élément d'arbre (3) étant monté à rotation dans les roulements (5) du support (4), caractérisé en ce qu'au moins les parties de l'élément d'arbre (3) montées dans les roulements (5) sont cylindriques.

2. Dispositif à trancher selon la revendication 1 dans lequel l'élément d'arbre (3) et au moins une partie de l'élément de rayage (2) sont combinés pour former un corps monobloc.

3. Dispositif à trancher selon la revendication 1 dans lequel la roue de rayage (1) comprend une partie de rayage (2) et un arbre (3) joints par des moyens de jonction.

4. Dispositif à trancher selon la revendication 1, 2 ou 3 dans lequel l'élément de rayage (2) possède au moins une partie tranchante (2a) ayant été soumise à un travail de finition utilisant l'élément d'arbre (3) comme référence, ladite parie tranchante (2a) présentant une rugosité de surface inférieure à Rmax= 1,5 »m.

5. Dispositif à trancher selon la revendication 4 dans lequel le travail de finition consiste en un polissage radial de l'élément de rayage (2).
